# EUROPEAN PATENT APPLICATION

(11) **EP 2 555 392 A2**
(43) Date of publication of application: **06.02.2013**
(21) Application number: 12178576.0
(22) Date of filing: 31.07.2012
(51) Int. Cl.: H02K 15/02

(54) **Segmented rotor and stator lamination cores**

(30) Priority: 04.08.2011 US 201113198360
(71) Applicant: Tempel Steel Company, Chicago IL 60640-1020 (US)
(72) Inventor: Bender, Mark, Algonquin, IL Illinois 60102 (US)
(74) Representative: Lawrence, John

(57) **Abstract**

In a lamination core (6), a punched material strip (20) is wound to provide layers of the core. The material strip (20) comprises a plurality of semi-circle individual strip segments (7A-7E) linked by hinge-like carrying webs (13) between adjacent split lines (14, 15) at adjacent ends of the respective adjacent strip segments (7F, 7G). Each strip segment (7A-7E) has a plurality of teeth (9) defining slots (12). A segment arc angle of the segment (7A-7E) is not equally divisible into 360° and a slot arc angle of the slots (12) is equally divisible into the segment arc angle, so that mated lines (26) of one winding (24) defined by respective adjacent split lines of adjacent are laterally offset with respect to mated lines (27) defined by respective adjacent split lines of an adjacent winding (25).

## Description

### BACKGROUND

The use of segmented rotor and stator lamination cores such as for electric motors, generators, and alternator cores, for example, is known and becoming increasingly prevalent as manufacturers move toward designs that utilize different steels for the rotor and stator laminations, and the designs of motors dictate smaller ratios of net lamination weight versus gross material weight if produced with conventional full round manufacturing methods. Traditional known segment designs include individual and prestacked laminations that combine multiple slot openings with a segment angle equal to an even multiple of 360° with a slot angle that is an even multiple of the segment angle, or individual tooth segments where the slot and segment angles are equal. When assembling the segments into a finished motor it is desirable to disorient the assembly of each individual layer to insure the lamination segment split lines are not directly above/below one another to improve the flux transfer in the motor core. This becomes time consuming when using individual laminations and is impossible with prestacked laminations.

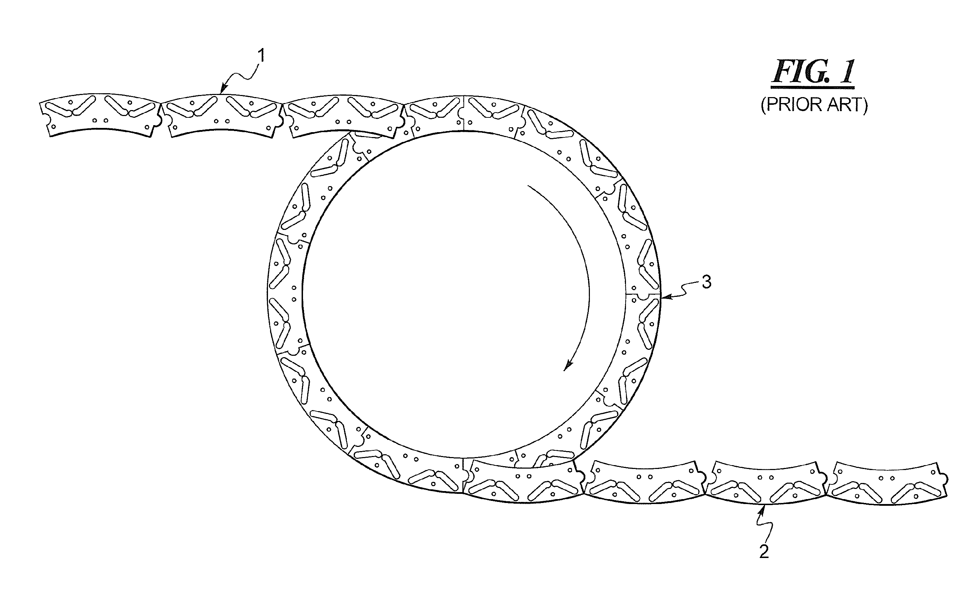

Mitsui Hi-TEC of Japan has previously disclosed the use of a segmentable round core which accomplished disorientation of the split lines by providing two segmented strips 1 and 2 as show in prior art Fig 1 feeding in to the core 3 being wound simultaneously from the left side and the right side. However, this procedure is complicated since two segmented strips are required.

### SUMMARY

It is an object to provide a simplified assembly of segmented rotor and stator lamination cores to achieve a disorientation in the assembly of each individual layer such that the lamination segment split lines are not directly above/below one another.

In accordance with a first aspect of the invention there is provided a method for assembling a lamination core, comprising the steps of:
providing a material strip and creating a segment strip from the material strip comprising a plurality of semi-circle individual strip segments linked in series by respective hinge-like carrying webs between adjacent split lines at adjacent ends of the respective adjacent strip segments, each strip segment having a plurality of teeth defining slots there between, a segment arc angle of an arc defined by the segment not being equally divisible into 360° and a slot arc angle of an arc defined by and extending between center-lines of teeth defining the slot being equally divisible into the segment arc angle; and
winding the punched segment strip to form the lamination core, adjacent split lines mating to form respective mated lines, the mated lines of adjacent windings being laterally offset with respect to one another.

The mated lines of adjacent windings may be laterally offset with respect to one another by one-half of a segment arc length so that the mated line of an upper winding falls directly in a middle of a segment directly beneath it in an adjacent lower winding.

The core may comprise a stator core or a rotor core.

The segment split lines may be lines which are meandering and not straight and have respective interlock portions serving as lamination interlocks.

At least one interlock comprising a protrusion may be provided in each strip segment serving as a segment interlock locking a top segment to an adjacent bottom segment lying beneath. The protrusion comprises a dimple protruding above or below a plane defined by the strip segment lamination.

At least one bolt hole may be provided in at least one of the strip segments of a winding.

At least one weld notch may be provided at a periphery of at least one of the segments in a winding for use in welding the core laminations together after completion of the winding process.

The material strip may be fed into a stamping die and the material strip punched with the stamping die to create said segment strip.

In accordance with a second aspect of the invention there is provided a method for assembling a lamination core, comprising the steps of:
feeding a material strip into a stamping die;
punching the material strip with the stamping die to create a punched segment strip comprising a plurality of semi-circle individual strip segments having interlock protrusions and linked in series by respective hinge-like carrying webs between adjacent split lines at adjacent ends of the respective adjacent strip segments, the split lines having a meandering path defining interlocking with one another, each strip segment having a plurality of teeth defining slots there between, a segment arc angle of an arc defined by the segment not being equally divisible into 360° and a slot arc angle of an arc defined by and extending between center-lines of teeth defining the slot being equally divisible into the segment arc angle; and
winding the punched segment strip to form the lamination core, adjacent split lines mating to form respective mated lines, the mated lines of adjacent windings being laterally offset with respect to one another.

In accordance with a third aspect of the invention there is provided a lamination core, comprising:
a single continuous segment strip wound in helical fashion to form a plurality of adjacent windings, the core being formed of only a single wound segment strip forming a single helix only;
the segment strip comprising a plurality of semi-circle individual strip segments linked in series by respective hinge-like carrying webs between adjacent split lines at adjacent ends of the respective adjacent strip segments, each strip segment having a plurality of teeth defining slots there between, a segment arc angle of an arc defined by the segment not being equally divisible into 360° and a slot arc angle of an arc defined by and extending between center-lines of teeth defining the slot being equally divisible into the segment arc angle; and
adjacent split lines mating to form respective mated lines, the mated lines of adjacent windings being laterally offset with respective to one another.

The mated lines of adjacent windings may be laterally offset with respect to one another by one-half of a segment arc length so that the mated line of an upper winding falls directly in a middle of a segment directly beneath it in an adjacent lower winding.

The core may comprise a stator core or a rotor core.

The segment split lines may be lines which are meandering and not straight and have respective interlock portions serving as lamination interlocks.

At least one interlock comprising a protrusion may be provided in each strip segment serving as a segment interlock locking a top segment to an adjacent bottom segments lying beneath. The protrusion may comprise a dimple protruding above or below a plane defined by the strip segment lamination.

At least one bolt hole may be provided in at least one of the strip segments of a winding.

At least one weld notch may be provided at a periphery of at least one of the segments on a winding for use in welding the core laminations together after completion of the winding process.

In accordance with a fourth aspect of the invention there is provided a lamination core, comprising:
a single continuous punched segment strip wound in helical fashion to form a plurality of adjacent windings, the core being formed of only a single wound punched segment strip forming a single helix only;
the punched segment strip comprising a plurality of semi-circle individual strip segments having interlock protrusions and linked in series by respective hinge-like carrying webs between adjacent split lines at adjacent ends of the respective adjacent strip segments, the split lines having a meandering path defining interlocking portions with one another, each strip segment having a plurality of teeth defining slots there between, a segment arc angle of an arc defined by the segment not being equally divisible into 360° and a slot arc angle of an arc defined by and extending between center-lines of teeth defining the slot being equally divisible into the segment arc angle; and
adjacent split lines mating to form respective mated lines, the mated lines of adjacent windings being laterally offset with respective to one another.

In a lamination core according to an aspect of the invention, a punched material strip is wound to provide layers of the core. The material strip comprises a plurality of semi-circle individual strip segments linked by hinge-like carrying webs between adjacent split lines at adjacent ends of the respective adjacent strip segments. Each strip segment has a plurality of teeth defining slots. A segment arc angle of the segment is not equally divisible into 360 degrees, and a slot arc angle of the slots is equally divisible into the segment arc angle, so that mated lines of one winding defined by respective adjacent split lines are laterally offset with respect to mated lines defined by respective adjacent split lines of an adjacent winding.

### BRIEF DESCRIPTION OF THE DRAWINGS

Fig 1 is a top view of a prior art method for assembling a segmented stator lamination core;
Fig 2 is a top view of a method according to a preferred embodiment for assembling a segmented stator lamination core; and
Fig 3 is a side view of the core shown in Fig 2.

### DESCRIPTION OF THE PREFERRED EMBODIMENT

For the purposes of promoting an understanding of the principles of the invention, reference will now be made to the preferred embodiment/best mode illustrated in the drawings and specific language will be used to describe the same. It will nevertheless be understood that no limitation of the scope of the invention is thereby intended, and such alterations and further modifications in the illustrated embodiment and such further applications of the principles of the invention as illustrated as would normally occur to one skilled in the art to which the invention relates are included.

The preferred embodiment allows for the assembly of individual layers (each winding being considered an individual layer) of loose segment laminations that by rule will always result in disoriented mated lines formed by respective adjacent split lines of adjacent layers (windings). Two rules must be followed to insure this happens, these rules being a basis of the preferred embodiment:
1. The segment arc angle (angle of an arc defined by the semi-circle segment) must be such that it is not equally divisible into 360°; and
2. The slot arc angle (angle of an arc defined by and extending between center-lines of teeth defining each slot) must be equally divisible into the segment arc angle.

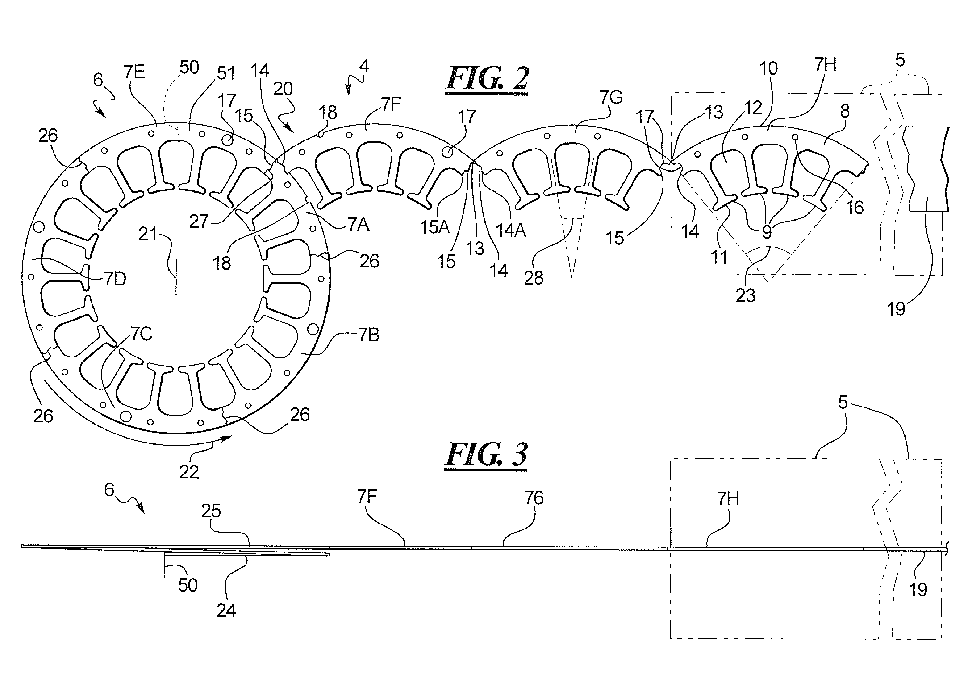

The method of the preferred embodiment may be understood by the stamping and winding system shown generally at 4 in Fig 2. First the creation of strip segments 7A-7H of a punched segment strip 20 will be described prior to a helical winding for the formation of a stator core 6 being assembled.

A stamping die 5 creates a series of semi-circle strip segments 7A-7H linked together in series by respective carrying webs 13 lying there between. In Fig 2 semicircle strip segments 7A-7E have already been helically wound to begin formation of the stator core 6. Fig 3 shows a side view of the wound core 6. Segments 7F, 7G, and 7H have not yet been wound.

Strip segment 7H shown just before exiting from the stamping die 5, but after final stamping, has a curved base portion 8 and inwardly extending tooth portions 9 having gaps there between for receiving coil wires for the stator core. This strip segment forming a lamination has a lamination outer diameter 10 and a lamination inner diameter 11. Slot openings 12 are formed between the tooth portions 9. The carrying web 13 acts like a flexible hinge and is located between the strip segment 7H and the strip segment 7G. Each of the segments 7A-7H is thus connected in flexible fashion with respect to each other by respective webs 13 to form the punched strip 20.

Segment split lines 14, 15 are located at the end of each base portion 8. The segment split lines 14, 15 have respective interlock portions 14A, 15A (as shown between segments 7F and 7G in Fig 2). These interlocks serve as lamination interlocks.

Additional interlocks 16 in the form of dimples or downward protrusions from a surface plane of the lamination are provided in each strip segment serving as segment interlocks. Additionally, bolt holes such as 17 shown in strip segments 7E, 7F, and at the web between 7G and 7H, are also provided. Finally, weld notches 18 such as shown in segments 7A and 7F may be provided. The lamination interlocks 14, 15, the bolt holes 17, and the weld notches 18 are all useful for maintaining core integrity after the winding process is completed for the stator core 6.

The above features are punched in a steel strip material 19 input to, and then progressively travelling through, the multi-station stamping die 5 where additional features are added at each station. The bolt hole 17 and weld notch 18 features may be cam actuated and located in multiple stations to insure they line up correctly in the finished core 6.

The punched segment strip 20 is then wound to form the round core 6. This can be done in the same die that produces the punched segment strip 20 or in a secondary winding operation. The winding operation rotates the individual segments around a common center axis 21 in a winding direction 22 causing the punched segment strip 20 to bend, thus bringing the segment split lines 14 into mating contact with the segment split lines 15 of the adjacent segment to form mated lines 26 in the bottom winding or layer 24 and mated lines 27 which will be formed as the second or upper winding or layer 25 is completed (mating line 27 in Fig. 2 has not yet been formed by the mating of the adjacent split lines 14, 15). The beginning end of the initial winding segment 7A of lower winding 24 is shown at 50. The first rule requiring that the segment arc angle shown at 23 not be evenly divisible into 360° and the second rule requiring that the slot arc angle 28 being equally divisible into the segment angle 23 insures the disorientation of the mated lines 26, 27 from layer (or winding) 24 to layer (or winding) 25. For example, a segment with a segment arc angle 23 of 80° and a slot arc angle 28 of 20° would require 4.5 segments per 360° rotation. The additional .5 segment is shown at 47 as part of segment 7E and would end up on the subsequent layer 25 with the mated line at 27 falling directly in the middle of the segment 7A beneath it see Figures 2 and 3. Thus a lateral offset or disorientation of the mated lines of adjacent windings is achieved.

When the desired number of rotations or core height is achieved the segment strip 20 which was thus wound as a single helix to form the entire core is separated at the carrying web 13 to complete the winding process. If the helical segment winding is occurring in the stamping die a cam actuated separator punch is required. Depending on end user requirements the segment core 6 can be finished at this time. Additional operations can include any of the following:
a. Compression of the core to offset the start and stop of the segment strip at the top and bottom of the core to make the core parallel.
b. Welding of the core to aid in core rigidity and shape retention.
c. Compression of the core to fully engage the interlocks 16 that may have been punched into the material strip 19 resulting in better core rigidity and shape retention.

Some of the die punching process described above is known technology in lamination manufacturing. However the rules stated above which produce the disorientation of the segment mated split lines 26, 27 between layers of wound segment laminations is not known.

Although the preferred embodiment was described using the example of a stator core, the method and core produced is equally applicable to a rotor core.

Although a preferred exemplary embodiment is shown and described in detail in the drawings and in the preceding specification, it should be viewed as purely exemplary and not as limiting the invention. It is noted that only a preferred exemplary embodiment is shown and described, and all variations and modifications that presently or in the future lie within the protective scope of the invention should be protected.

## Claims

1. A method for assembling a lamination core, comprising the steps of:
providing a material strip and creating a segment strip from the material strip comprising a plurality of semi-circle individual strip segments linked in series by respective hinge-like carrying webs between adjacent split lines at adjacent ends of the respective adjacent strip segments, each strip segment having a plurality of teeth defining slots there between, a segment arc angle of an arc defined by the segment not being equally divisible into 360° and a slot arc angle of an arc defined by and extending between center-lines of teeth defining the slot being equally divisible into the segment arc angle; and
winding the punched segment strip to form the lamination core, adjacent split lines mating to form respective mated lines, the mated lines of adjacent windings being laterally offset with respect to one another.

2. The method of claim 1 wherein said material strip is fed into a stamping die and the material strip is punched with the stamping die to create said segment strip.

3. The method of claim 2 wherein the plurality of semi-circle individual strip elements comprise interlock protrusions, the split lines having a meandering path defining interlocking with one another.

4. A lamination core, comprising:
a single continuous segment strip wound in helical fashion to form a plurality of adjacent windings, the core being formed of only a single wound segment strip forming a single helix only;
the segment strip comprising a plurality of semi-circle individual strip segments linked in series by respective hinge-like carrying webs between adjacent split lines at adjacent ends of the respective adjacent strip segments, each strip segment having a plurality of teeth defining slots there between, a segment arc angle of an arc defined by the segment not being equally divisible into 360° and a slot arc angle of an arc defined by and extending between center-lines of teeth defining the slot being equally divisible into the segment arc angle; and
adjacent split lines mating to form respective mated lines, the mated lines of adjacent windings being laterally offset with respective to one another.

5. The lamination core of claim 4 or the method of any one of claims 1 to 3 wherein the mated lines of adjacent windings are laterally offset with respect to one another by one-half of a segment arc length so that the mated line of an upper winding falls directly in a middle of a segment directly beneath it in an adjacent lower winding.

6. The lamination core of claim 4 or claim 5 or the method of any one of claims 1 to 3 wherein the core comprises a stator core or wherein the core comprises a rotor core.

7. The lamination core of claim 4 or the method of any one of claims 1 to 3 wherein the segment split lines are lines which are meandering and not straight and have respective interlock portions serving as lamination interlocks.

8. The lamination core of claim 4 or the method of any one of claims 1 to 3 wherein at least one interlock comprising a protrusion is provided in each strip segment serving as a segment interlock locking a top segment to an adjacent bottom segments lying beneath.

9. The lamination core or method of claim 8 wherein the protrusion comprises a dimple protruding above or below a plane defined by the strip segment lamination.

10. The lamination core of claim 4 or the method of any one of claims 1 to 3 wherein at least one bolt hole is provided in at least one of the strip segments of a winding.

11. The lamination core of claim 4 or the method of any one of claims 1 to 3 wherein at least one weld notch is provided at a periphery of at least one of the segments on a winding for use in welding the core laminations together after completion of the winding process.

12. The lamination core of claim 4, wherein the segment strip is a punched segment strip, the plurality of semi-circle individual strip segments having interlock protrusions, the split lines having a meandering path defining interlocking portions with one another.
